# EUROPÄISCHE PATENTSCHRIFT

(11) **EP 3 713 797 B1**
(45) Veröffentlichungstag und Bekanntmachung des Hinweises auf die Patenterteilung: **22.09.2021**
(21) Anmeldenummer: 18804273.3
(22) Anmeldetag: 15.11.2018
(51) Int. Cl.: B60R 22/46

(54) **GURTSTRAFFER MIT EINEM MASSEKÖRPERANTRIEB**
BELT PRE-TENSIONER WITH MOMEMTUM-BODY-DRIVE
PRÉTENSIONNEUR DE CEINTURE DE SÉCURITÉ AVEC ACTUATION AUX MOYENS DES CORPS ACTIVANTS

(30) Priorität: 24.11.2017 DE 102017221028
(43) Veröffentlichungstag der Anmeldung: 30.09.2020
(73) Patentinhaber: Autoliv Development AB, 447 83 Vårgårda (SE)
(72) Erfinder: FISCHER, Christian, 24558 Henstedt-Ulzburg (DE); SCHMIDT, Martin, 25337 Elmshorn (DE)
(74) Vertreter: Müller Verweyen
(86) Internationale Anmeldenummer: PCT/EP2018/081328
(87) Internationale Veröffentlichungsnummer: WO 2019/101615

(56) Entgegenhaltungen:
- DE-A1-102009 039 533
- JP-A- 2001 163 182
- US-B2- 6 722 600

## Beschreibung

Die Erfindung betrifft einen Gurtstraffer mit einem Massekörperantrieb mit den Merkmalen des Oberbegriffs von Anspruch 1.

Ein solcher Gurtstraffer der gattungsgemäßen Art ist z.B. aus der DE 196 02 549 A1 bekannt. Der Gurtstraffer weist eine Gurtwelle auf, auf welcher ein Sicherheitsgurt aufwickelbar ist. Die Gurtwelle ist in einem fahrzeugfest befestigbaren Rahmen drehbar gelagert. Bei diesem Gurtstraffer ist der Antrieb aus einer Kette lose aneinander anliegender Massekörper gebildet, die in einem Strafferrohr geführt sind und durch einen von einem pyrotechnischen Gasgenerator erzeugbaren Druck antreibbar sind. Bei Zündung des Gasgenerators wird die Kette der Massekörper beschleunigt und in Eingriff mit einem drehfest mit der Gurtwelle verbundenen Strafferantriebsrad mit zu der Form der Massekörper formkorrespondierenden Ausnehmungen gebracht. Die Ausnehmungen sind in dieser Ausführungsform durch kalottenförmige Halbschalen gebildet, die durch radial außen vorstehende Körperkanten voneinander getrennt sind. Die Massekörper liegen durch den Druck in dem Strafferrohr vor dem Strafferantriebsrad aneinander an und gelangen als Kette in Eingriff mit dem Strafferantriebsrad, indem die Massekörper der Reihe nach in die kalottenförmigen Halbschalen eingreifen. Beim Verlassen des Strafferantriebsrades können die Massekörper den Kontakt zueinander verlieren, da die vor dem Strafferantriebsrad vorhandene durch das Strafferantriebsrad ausgeübte Gegenkraft fehlt. Nach dem Abschluss des Straffvorganges wird die Bewegungsrichtung des Strafferantriebsrades aufgrund der Bewegungsumkehr des Sicherheitsgurtes mit der einsetzenden kraftbegrenzten Gurtbandauszugsbewegung umgekehrt, wobei in diesem Fall die Gefahr besteht, dass ein Massekörper sich in einer kritischen Stellung am Ausgang des Strafferantriebsrades befindet, in der er bei einer Rückdrehung des Strafferantriebsrades zwischen einer die Halbschalen trennenden Körperkante und dem Strafferrohr bzw. einer Wandung des Straffergehäuses eingeklemmt wird und dadurch das Strafferantriebsrad und damit auch die Gurtwelle in Gurtauszugsrichtung wenigstens kurzzeitig blockiert. Die Blockierung des Strafferantriebsrades und der Gurtwelle kann dann zu einer unerwünschten Erhöhung des Kraftbegrenzungsniveaus führen, die insbesondere bei kleinen Kraftbegrenzungsniveaus eine unnötig hohe Insassenbelastung zur Folge hat.

In der DE 10 2009 039 533 A1 wird weiter vorgeschlagen, dass ein Federelement vorgesehen ist, das in einem Austrittsbereich der Massekörper aus dem Strafferantriebsrad angeordnet ist. Die Massekörper gelangen beim Austritt aus dem Strafferantriebsrad nacheinander zur Anlage an dem Federelement, welches auf den jeweils anliegenden Massekörper eine Kraft ausübt, durch die der Massekörper von dem Strafferantriebsrad weg bewegt wird, oder in Richtung einer Ausnehmung des Strafferantriebsrades zurück gedrängt wird, je nachdem, in welcher Stellung sich der Massekörper an dem Federelement befindet. Aufgrund der von dem Federelement ausgeübten Kraft werden die Massekörper nach dem Austritt aus dem Strafferantriebsrad aktiv aus dem kritischen Bereich heraus bewegt. Bevor die Massekörper in den kritischen Bereich eintreten, wirkt die von dem Federelement auf die Massekörper ausgeübte Kraft in Richtung der Ausnehmung, so dass der Eintritt der Massekörper in dem kritischen Bereich verzögert wird. Dadurch müssen auf die Massekörper zum Überwinden der Kraft von dem Federelement höhere Kräfte von den nachschiebenden Massekörpern wirken, die nach dem Überwinden der Gegenkraft des Federelementes eine zusätzliche Beschleunigung der Massekörper aus dem kritischen Bereich bewirken. Außerdem befinden sich die Massekörper dadurch für einen längeren Zeitraum in einer Stellung, in der sie bei einer Rückdrehung des Strafferantriebsrades bzw. der Gurtwelle sofort wieder in einer der Ausnehmungen aufgenommen werden.

Aufgabe der Erfindung ist es, einen alternativen Gurtstraffer mit einem Massekörperantrieb zu schaffen, bei dem die Wahrscheinlichkeit eines Einklemmens eines Massekörpers und einer dadurch bewirkten Blockierung der Gurtwelle zumindest verringert ist.

Die Aufgabe wird durch einen Gurtstraffer mit den Merkmalen des Anspruchs 1 gelöst. Weitere bevorzugte Ausführungsformen der Erfindung sind den Unteransprüchen, der Beschreibung sowie den zugehörigen Figuren zu entnehmen.

Der Grundgedanke der Erfindung besteht darin, dass die Lagerung der Gurtwelle in der Öffnung des Gehäuses in Radialrichtung nachgiebig ausgebildet ist. Durch die nachgiebige Lagerung der Gurtwelle kann diese zusammen mit dem darauf drehfest gehaltenen Strafferantriebsrad für den Fall, dass ein Massekörper festzuklemmen droht oder festgeklemmt ist und dadurch eine Radialkraft auf das Strafferantriebsrad und die Gurtwelle ausübt, radial ausweichen. Dadurch führt die Gurtwelle zusammen mit dem Strafferantriebsrad eine Ausweichbewegung aus, durch welche der blockierte oder gerade blockierende Massekörper freigegeben wird. Der Massekörper kann dann entweder zurück in die Ausnehmung des Strafferantriebsrades eintreten oder aus dem Strafferantriebsrad austreten. Die Nachgiebigkeit der Lagerung ist dabei bewusst so ausgelegt, dass sie erst bei sehr hohen Radialkräften eine Bewegung der Gurtwelle ermöglicht, während die Gurtwelle bei normalen Radialkräften während der Gurtbandeinzugs- und Gurtbandauszugsbewegung bewusst keine Radialbewegungen ausführen kann, indem die Lagerung diese Kräfte ohne eine elastische Verformung aufnehmen kann.

Dabei kann die Nachgiebigkeit der Lagerung entlang des Umfanges der Öffnung bevorzugt unterschiedlich ausgebildet sein, so dass die Gurtwelle in bevorzugte Richtungen ausweichen kann, bzw. gegen aus bevorzugten Richtungen einwirkenden Radialkräften nachgiebig gelagert ist.

Dabei ist die Nachgiebigkeit der Lagerung bevorzugt in einem Elastizitätsabschnitt der Öffnung am größten, welcher in einem Winkel von wenigstens 90 Grad zu einer Austrittsstelle der Massekörper aus den Ausnehmungen des Strafferantriebsrades beginnt. Die Kräfte bei einem drohenden Festklemmen eines Massekörpers werden von diesem immer an der Austrittsstelle radial einwärts auf das Strafferantriebsrad und die Gurtwelle ausgeübt. Durch die vorgeschlagene Anordnung des Beginns des Elastizitätsabschnittes kann sichergestellt werden, dass die Gurtwelle in allen denkbaren Lastfällen bei einem Festklemmen oder kurz bevorstehenden Festklemmen eines Massekörpers ausweichen kann, da der Elastizitätsabschnitt aufgrund seiner Anordnung immer wenigstens einen vektoriellen Anteil der Reaktionskraft aufnimmt und infolgedessen unter dieser aufgrund seiner elastischen Eigenschaften nachgibt.

Dabei wird weiter vorgeschlagen, dass der Elastizitätsabschnitt in einem Winkel von maximal 270 Grad zu der Austrittsstelle endet. Durch die vorgeschlagene maximale Ausdehnung des Elastizitätsabschnittes kann dieser maximal ausgenutzt werden, während die Lagerung in dem verbleibenden Abschnitt mit der höheren Festigkeit hinsichtlich der gleichzeitig während des Normalgebrauchs wichtigen Lagereigenschaften nicht unnötig geschwächt wird.

Die Nachgiebigkeit kann konstruktiv besonders einfach durch einen oder mehrere Freiräume in einem Randabschnitt der Öffnung verwirklicht sein. Damit müssen keine unterschiedlichen Werkstoffe oder besondere Maßnahmen zur Realisierung der Nachgiebigkeit vorgesehen sein, die Nachgiebigkeit ergibt sich allein durch die Schwächung des Materials im Bereich des Randes der Lageröffnung, wobei die durch die Freiräume reduzierten Wandstärken ein Einfedern der Wandung der Lagerung ermöglichen.

Dabei kann die Nachgiebigkeit besonders einfach durch eine an dem Rand der Öffnung angeordnete, in Radialrichtung federnde Zunge gebildet sein, an welcher die Gurtwelle anliegt. Die Zunge ist nur einseitig mit dem Gehäuse verbunden und federt damit besonders deutlich. Ferner wird dadurch die Richtung der Nachgiebigkeit besonders deutlich vorgegeben bzw. es ist möglich, die Richtung der Nachgiebigkeit besonders gut hinsichtlich der zu verwirklichenden Ausweichbewegung auszulegen.

Dabei kann die Zunge bevorzugt eine konstante Dicke aufweisen, wodurch eine möglichst gleichmäßige und stetige Ausweichbewegung der Gurtwelle ermöglicht wird, ohne dass dabei Kraftspitzen überwunden werden müssen.

Weiter wird vorgeschlagen, dass das Gehäuse durch eine an einem Rahmen des Gurtstraffers befestigte Strafferabdeckung gebildet ist. Das durch die Strafferabdeckung gebildete Gehäuse bildet eine Wandung aus, welche den Strafferantrieb nach außen hin abdeckt. Diese Wandung der Strafferabdeckung kann dann bevorzugt als formstabile Lagerstelle verwendet werden. Da die Strafferabdeckung aufgrund der während des Straffvorganges aufzunehmenden Kräfte ohnehin eine gewisse Festigkeit aufweisen muss, kann diese bevorzugt hier zusätzlich zur Lagerung der Gurtwelle genutzt werden. Die Strafferabdeckung ist fest mit dem Rahmen verbunden, über den der Gurtstraffer an einem Fahrzeug befestigt wird, so dass die Strafferabdeckung auch als fahrzeugfest angesehen werden kann, wenn der Gurtstraffer im Fahrzeug befestigt ist. Sofern der Strafferantrieb an einer Außenseite des Rahmens und damit auch die Strafferabdeckung an einer Außenseite des Rahmens befestigt ist, kann dadurch auch der Abstand der beiden Lagerstellen der Gurtwelle gegenüber einer bisher verwendeten Lagerung der Gurtwelle in den Schenkeln des Rahmens vergrößert werden, wodurch insgesamt eine stabilere Lagerung realisiert werden kann.

Weiter wird vorgeschlagen, dass die Nachgiebigkeit der Lagerung durch eine die Öffnung in eine Vorzugsrichtung erweiternde Ausnehmung gebildet ist. Durch die Ausnehmung wird die Öffnung in dem Gehäuse zu einem Oval erweitert, und die Gurtwelle kann in Richtung der Ausnehmung eine radiale Ausweichbewegung ausführen. Die Gurtwelle ist dabei in weiteren Lagerstellen elastisch gelagert, welche aber im Lastfall eines festgeklemmten Massekörpers bzw. eines gerade festklemmenden Massekörpers unter den wirkenden Radialkräften bewusst zerstört werden, so dass die Gurtwelle in Richtung der Ausnehmung ausweichen kann und der Massekörper wieder freigegeben wird. Die Ausnehmung definiert dabei, in welche Richtung die Gurtwelle ausweichen kann und ist bevorzugt in einem Winkel von 60 Grad bis 270 Grad zu der Austrittsstelle der Massekörper aus dem Strafferantriebsrad angeordnet, so dass die Gurtwelle aufgrund des in jedem Fall in diese Richtung wirkenden vektoriellen Anteils der Klemmkraft ausweicht und den Massekörper freigibt.

Die Ausnehmung bildet hier in Kombination mit der bewusst nachgiebigen bzw. zerstörbaren Lagerung der Gurtwelle in den weiteren Lagerstellen die Möglichkeit eines gezielten Ausweichens der Gurtwelle.

Die Erfindung wird im Folgenden anhand zweier bevorzugter Ausführungsformen unter Bezugnahme auf die beigefügten Figuren erläutert. Dabei zeigt
- Fig. 1: eine Schnittdarstellung eines erfindungsgemäßen Gurtstraffers, und
- Fig. 2: eine Schnittdarstellung des Gurtstraffers in Schnittrichtung durch den Strafferantrieb, und
- Fig. 3: eine Strafferabdeckung mit einer Öffnung gemäß einer ersten Ausführungsform, und
- Fig. 4: eine Sicht auf eine Seite eines Gurtstraffers mit einer Strafferabdeckung gemäß einer zweiten Ausführungsform, und
- Fig. 5: eine Sicht auf eine Seite eines Gehäuses des Gurtstraffers gemäß einer dritten Ausführungsform.

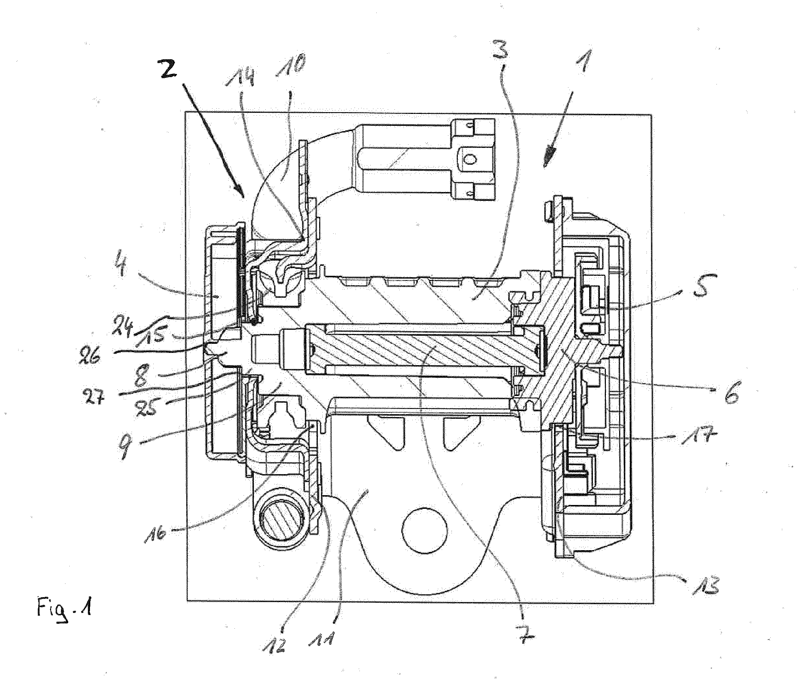

In der Figur 1 ist ein erfindungsgemäßer Gurtstraffer 1 mit einem fahrzeugfest befestigbaren Rahmen 11 zu erkennen, welcher U-förmig, mit zwei von einer Grundplatte vorstehenden Schenkeln 12 und 13 ausgebildet ist. In dem Rahmen 11 ist eine Gurtwelle 3 vorgesehen, welche über einen Torsionsstab 7 mit einem Profilkopf 6 verbunden ist. Dadurch bildet die Gurtwelle 3 zusammen mit dem Profilkopf 6 bis zu der plastischen Verformungsgrenze des Torsionsstabes 7 einen drehfesten Verbund. Der Profilkopf 6 durchgreift eine Öffnung 17 des in der Darstellung rechten Schenkels 13 des Rahmens 11 und ist in dieser mittels einer Blockiereinrichtung 5 fahrzeugfest blockierbar. Nachfolgend kann die blockierte Gurtwelle 3 nur noch unter einer plastischen Verformung des Torsionsstabes 7 weiter in Gurtbandauszugsrichtung drehen. Der Torsionsstab 7 arbeitet hier als bewährte Kraftbegrenzungseinrichtung zur Reduzierung der Insassenbelastung während der Rückhaltung des Insassen im Unfall.

An der linken Seite des in der Darstellung linken Schenkels 12 des Gurtstraffers 1 ist ein Strafferantrieb 2 vorgesehen, welcher die Gurtwelle 3 bei einer Aktivierung in einer Frühphase eines nicht mehr zu vermeidenden Unfalles schlagartig in Aufwickelrichtung antreibt und dadurch noch vorhandene Gurtlose aus dem Sicherheitsgurt herauszieht. Der Insasse wird dadurch frühzeitiger an die Fahrzeugverzögerung angekoppelt, wodurch der zur Verfügung stehende Vorverlagerungsweg vergrößert und die maximale Insassenbelastung weiter reduziert werden kann.

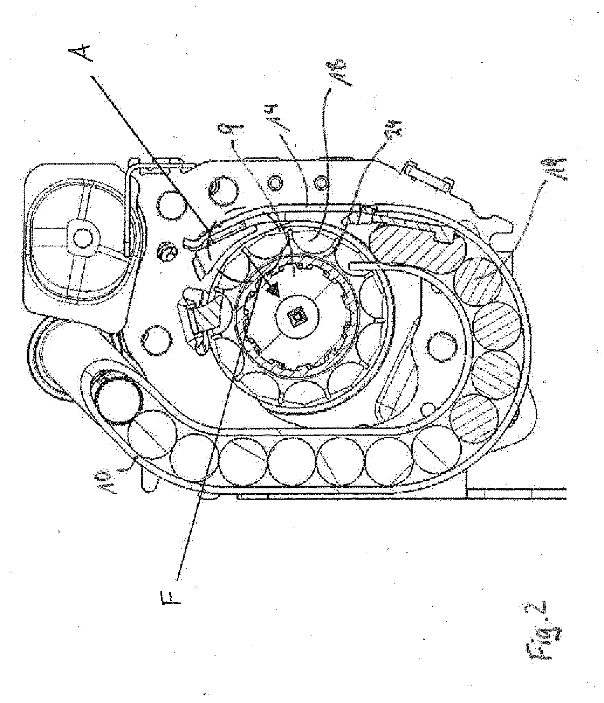

Der Strafferantrieb 2 umfasst ein auch in der Figur 2 zu erkennendes Strafferantriebsrad 24, welches über eine Verzahnung drehfest auf einem ersten axialen Fortsatz 9 der Gurtwelle 3 gehalten ist. Das Strafferantriebsrad 24 ist an seiner Radialaußenseite mit einer Vielzahl von aneinander angrenzenden, kalottenförmigen Ausnehmungen 18 versehen. Ferner ist ein Strafferrohr 10 mit einem in dem Ende des Strafferrohres 10 fixierten Gasgenerator vorgesehen, in dem eine Vielzahl von aneinander anliegenden Massekörpern 19 angeordnet sind. Das Strafferrohr 10 ist mit der freien Austrittsseite tangential auf das Strafferantriebsrad 24 gerichtet.

Ferner weist die Gurtwelle 3 einen zweiten Fortsatz 8 auf, welcher von dem ersten Fortsatz 9 vorsteht und einen kleineren Durchmesser aufweist. Der zweite Fortsatz 8 weist ferner drei radial vorstehende Federarme 22 auf, auf dem ein inneres Federende, das sogenannte Federherz, einer Triebfeder einer Federkassette 4 klemmend befestigt ist. Die Triebfeder spannt die Gurtwelle 3 in Aufwickelrichtung vor und dient dem Aufwickeln des Sicherheitsgurtes beim Abschnallvorgang bzw. der Ausübung einer geringen Rückzugskraft auf den Sicherheitsgurt, wenn der Insasse angeschnallt ist.

Der gesamte Strafferantrieb 2 wird zur Außenseite hin durch ein Gehäuse 14 oder auch Straffergehäuse abgedeckt und fixiert. In dem Gehäuse 14 ist eine Öffnung 15 vorgesehen, in der die Gurtwelle 3 mit einem zwischen den beiden Fortsätzen 9 und 8 angeordneten zylindrischen Lagerabschnitt 25 gelagert ist.

Der Strafferantrieb 2 wird dadurch aktiviert, indem der Gasgenerator gezündet wird, welcher daraufhin schlagartig eine sehr große Menge an Gas in einen Druckraum des Strafferrohres 10 zwischen den Gasgenerator und den als Kolben wirkenden ersten Massekörper 19 einleitet. Der Kolben treibt die Massekörperkette aus den aneinander anliegenden Massekörpern 19 aufgrund des treibenden Gasdruckes in Richtung des Strafferantriebsrades 24 an. Dadurch gelangen die Massekörper 19 sukzessive zum Eingriff in die Ausnehmungen 18 des Strafferantriebsrades 24 und treiben das Strafferantriebsrad 24 dadurch in der Darstellung der Figur 2 zu einer Drehbewegung entgegen dem Uhrzeigersinn an. Dadurch wird die drehfest mit dem Strafferantriebsrad 24 verbundene Gurtwelle 3 in Aufwickelrichtung des Sicherheitsgurtes angetrieben und der Sicherheitsgurt gestrafft.

Die Antriebsbewegung wird hier dadurch übertragen, indem die Massekörper 19 durch den erzeugten Gasdruck angetrieben werden und dabei in Form einer Kette mit aneinander anliegenden Massekörpern 19 zum Eingriff in die Ausnehmungen 18 des Strafferantriebsrades 24 gebracht werden. Dabei werden die Massekörper 19 in dem Strafferrohr 10 geführt. Beim Austritt aus dem Strafferrohr 10 und dem Eintritt in die Ausnehmungen 18 werden die Massekörper 19 seitlich durch einen Wandabschnitt des Gehäuses 14 unterstützt, so dass sie beim Eintritt in die Ausnehmungen 18 und während der Straffbewegung nicht seitlich ausweichen können. Nachdem die Massekörper 19 das Strafferantriebsrad 24 angetrieben haben, treten die Massekörper 19 aus den Ausnehmungen 18 des Strafferantriebsrades 24 an einer Austrittsstelle A aus und werden in einen Vorratsbehälter oder einen Hohlraum abgeführt. Da die Massekörper 19 dabei nicht mehr von dem Gasstrom angetrieben werden bzw. da die von dem Strafferantriebsrad 24 erzeugte Gegenkraft fehlt, liegen sie nicht mehr zwingend aneinander an, d.h. sie können im Extremfall den Kontakt zueinander verlieren und sehr viel einfacher freiere Bewegungen zueinander ausführen. Dadurch kann es im Extremfall passieren, dass ein Massekörper 19 zwischen der Wandung des Gehäuses 14 oder der Innenwandung des Strafferrohres 10 und einer Spitze einer Trennwand zwischen zwei Ausnehmungen 18 festklemmt und das Strafferantriebsrad 24 blockiert. Dies ist insbesondere dann problematisch, wenn die Gurtwelle 3 die Drehrichtung mit der sich an die Straffbewegung anschließenden kraftbegrenzten Gurtbandauszugsbewegung umkehrt und noch ein Massekörper 19 in dem Austrittsbereich des Strafferantriebsrades 24 vorhanden ist, da die Abführbewegung des Strafferantriebsrades 24 in diesem Fall ebenfalls kurzzeitig gestoppt und anschließend umgekehrt wird. Der festgeklemmte Massekörper 19 übt dabei eine radial einwärts gerichtete Klemmkraft F auf das Strafferantriebsrad 24 aus. Der mögliche Klemmbereich bzw. die kritische Austrittsstelle A weist dabei ungefähr einen Umfangsabschnitt von einem halben Durchmesser der Massekörper 19 für den Fall von kugelförmigen Massekörpern 19 auf.

Aus diesem Grunde kann die sich an die Straffbewegung anschließende Rückwärtsdrehbewegung der Gurtwelle 3 während der kraftbegrenzten Gurtbandauszugsbewegung durch einen nicht abgeführten und blockierten Massekörper 19 blockiert werden. Auch wenn sich der blockierte Massekörper 19 unter den wirkenden Kräften dann selbsttätig wieder löst, so hat auch eine kurzzeitige Blockierung der Gurtwelle 3 zumindest eine Überhöhung der Gurtkraft also eine Kraftspitze während der kraftbegrenzten Gurtbandauszugsbewegung mit einer entsprechend erhöhten Insassenbelastung zur Folge. Sofern sich der blockierte Massekörper 19 nicht selbsttätig löst, besteht sogar die Gefahr, dass die kraftbegrenzte Gurtbandauszugsbewegung vollständig blockiert wird.

Um die Wahrscheinlichkeit des Blockierens der Gurtwelle 3 zu reduzieren, ist die Lagerung der Gurtwelle 3 in der Öffnung 15 des Gehäuses 14 bewusst nachgiebig ausgebildet, so dass die Gurtwelle 3 zusammen mit dem Strafferantriebsrad 24 in diesem Fall ausweichen kann. Durch die Ausweichbewegung des Strafferantriebsrades 24 und der Gurtwelle 3 kann sich der blockierte Massekörper 19 selbsttätig wieder lösen, oder die Gurtwelle 3 kann zusammen mit dem Strafferantriebsrad 24 bereits in einer Anfangsphase der Festklemmbewegung des Massekörpers 19 ausweichen, so dass dieser erst gar nicht erst festklemmen kann.

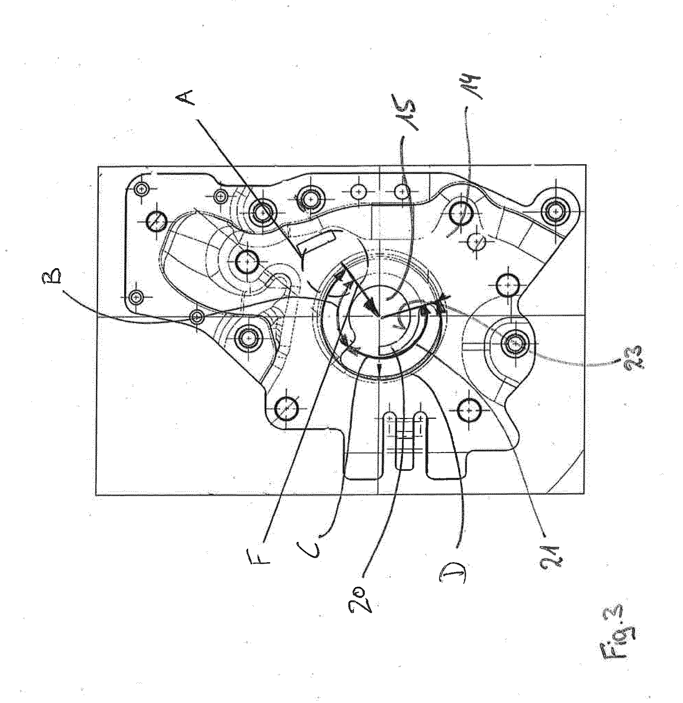

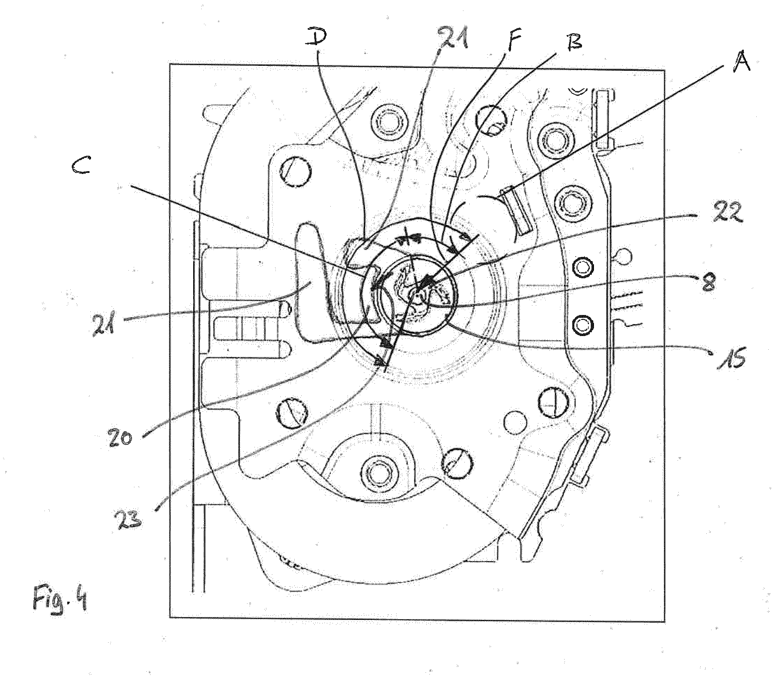

In den Figuren 3 und 4 sind zwei verschiedene Ausführungsformen der Erfindung zu erkennen, wie die Nachgiebigkeit im Bereich der Öffnung 15 bevorzugt ausgebildet sein kann. Die Ausrichtung des Gurtstraffers 1 entspricht der Ausrichtung des Gurtstraffers 1 in der Figur 2, nur dass hier das Gehäuse 24 aufgesetzt wurde, damit die Öffnung 15 zu erkennen ist. Das Strafferrohr 10 und das Strafferantriebsrad 24 können damit entsprechend der Figur 2 hinzugedacht werden.

Die Nachgiebigkeit ist hier jeweils durch einen oder mehrere Freiräume 21 und eine federnde Zunge 20 in dem Rand der Öffnung 15 gebildet, wobei die Zunge 20 jeweils eine teilkreisförmige, radial innere Lagerfläche 23 mit einem der Öffnung 15 entsprechenden Radius aufweist. Die Freiräume 21 und die Zunge 20 bilden zusammen einen Elastizitätsabschnitt, welcher ein gezieltes, gerichtetes Ausweichen der Gurtwelle 3 in eine Vorzugsrichtung ermöglicht, während die Lagerung in dem verbleibenden Bereich der Öffnung 15 bewusst nicht nachgiebig ausgebildet ist. Die Lagerfläche 23 der Zunge 20 weist einen dem Radius der Öffnung 15 entsprechenden Radius auf. Ferner ist die Zunge so angeordnet und ausgerichtet, dass die Lagerfläche 23 der Zunge 20 und der übrige Rand der Öffnung 15 außerhalb des Elastizitätsabschnittes im Querschnitt senkrecht durch die Drehachse der Gurtwelle 3 einen virtuellen Lagerkreis bilden.

Der Elastizitätsabschnitt, gebildet durch die Freiräume 21 und die Zunge 20, in welchen die Gurtwelle 3 ausweichen kann, ist so angeordnet und bemessen, dass er in einem Winkel B von wenigstens 60 Grad ausgehend von der in der Figur 2 zu erkennenden Austrittsstelle A der Massekörper 19 aus dem Strafferantriebsrad 24 entgegen dem Uhrzeigersinn beginnt. Ferner erstreckt sich der Elastizitätsabschnitt über einen Umfangswinkel C von maximal 180 Grad, also ausgehend von der Austrittsstelle A der Massekörper 19 bis zu einem Winkel von 240 Grad.

Für den Fall eines blockierten Massekörpers 19 oder eines sich gerade in eine blockierende Stellung bewegenden Massekörpers 19 übt dieser eine radial einwärts gerichtete Klemmkraft F auf das Strafferantriebsrad 24 und die Gurtwelle 3 aus, welche immer mindestens einen vektoriellen Anteil aufweist, der in eine Richtung zwischen 60 Grad und 240 Grad zu der Austrittsstelle A der Massekörper 19 gerichtet ist. Damit kann die Gurtwelle 3 aufgrund der vorgeschlagenen Anordnung des Elastizitätsabschnittes unter allen erdenklichen Bedingungen eines blockierten Massekörpers 19 unter der wirkenden Klemmkraft F ausweichen, und der Massekörper 19 kann sich in jedem Fall selbsttätig durch die Ausweichbewegung der Gurtwelle 3 bzw. des Strafferantriebsrades 24 wieder lösen, bzw. es kann verhindert werden, dass der Massekörper 19 in eine die Gurtwelle 3 blockierende Stellung gelangt, indem die Gurtwelle 3 und das Strafferantriebsrad 24 vorher ausweichen.

In der Figur 3 ist die Zunge 20 durch einen Steg mit einer konstanten Breite oder Dicke in Bezug zu der Umfangsrichtung ausgebildet. Die Zunge 20 ist mit einem Ende an dem Rand der Öffnung 15 gehalten und erstreckt sich in Umfangsrichtung. Die Zunge 20 ist hier durch einen Freiraum 21 in Form einer Bohne von dem verbleibenden Material in dem Rand der Öffnung 15 getrennt und kann aufgrund der Befestigung an nur einem Ende unter Ausnutzung ihrer elastischen Eigenschaften in den Freiraum 21 hinein einfedern, also nachgeben. Gleiches gilt für die in der Figur 4 gezeigte Ausführungsform, in welcher die Zunge 20 in Form eines Hakens mit einer stirnseitig angeordneten Lagerfläche 23 ausgebildet ist. Der Haken ist zu beiden Seiten hin durch Freiräume 21 aus dem Material des Gehäuses 14 freigeschnitten und mit einem Ende an dem Gehäuse 14 gehalten. Für den Fall eines festklemmenden Massekörpers 19 kann die Zunge 20 auch hier in den rückseitigen Freiraum 21 einfedern, also nachgeben, wodurch die Ausweichbewegung der Gurtwelle 3 ermöglicht wird, und der Massekörper 19 wieder freigegeben wird.

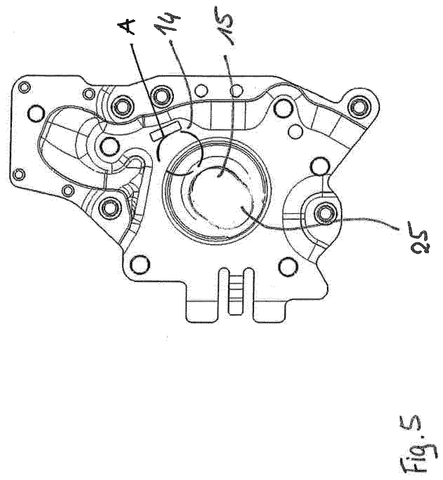

In der Figur 5 ist das Gehäuse 14 gemäß einer dritten Ausführungsform zu erkennen. Die Öffnung 15 ist diametral zu der Austrittsstelle A durch eine Ausnehmung 25 zu einem Oval erweitert. Die Gurtwelle 3 ist, wie in der Figur 1 zu erkennen ist, in den Lagerstellen 26 und 27 in Lageröffnungen der Federkassette 4 gelagert, welche aber nur für sehr geringe Kräfte ausgelegt sind. Die Federkassette 4 selbst ist aus einem Kunststoffgehäuse mit einer darin aufgenommenen Triebfeder gebildet und an dem Gehäuse 14 befestigt, welches seinerseits an dem Rahmen 11 befestigt ist, so dass die Lagerstellen 26 und 27 der Federkassette 4 in der befestigten Stellung des Gurtstraffers 1 eine fahrzeugfeste Lagerung der Gurtwelle 3 bildet. Das Gehäuse der Federkassette weist eine vergleichsweise dünne Wandstärke auf und ist aus Kunststoff gefertigt, so dass die Gurtwelle 3 in den Lagerstellen 26 und 27 innerhalb gewisser Grenzen bewusst elastisch gelagert ist. Werden die aufnehmbaren Lagerkräfte überschritten, so wird die Lagerung in den Lagerstellen 26 und 27 zerstört und die Gurtwelle 3 kann die radiale Ausweichbewegung in Richtung der Ausnehmung 25 ausführen.

Die Nachgiebigkeit der Lagerung der Gurtwelle 3 ergibt sich durch die grundsätzlich sehr einfache Lagerung in den Lagerstellen 26 und 27 in Verbindung mit der durch die Ausnehmung 25 oder auch durch den Elastizitätsabschnitt geschaffene Ausweichmöglichkeit.

## Patentansprüche

1. Gurtstraffer (1) mit einem Massekörperantrieb für einen Sicherheitsgurt eines Kraftfahrzeuges mit einer Kraftbegrenzungseinrichtung mit
- einer in wenigstens einer Öffnung (15) eines fahrzeugfest befestigbaren Gehäuses (14) drehbar gelagerten Gurtwelle (3), auf der der Sicherheitsgurt aufwickelbar ist,
- einem drehfest mit der Gurtwelle (3) verbundenen Strafferantriebsrad (24) mit über den Umfang verteilten regelmäßig angeordneten Ausnehmungen (14),
- einer den Massekörperantrieb bildenden Kette aus losen Massekörpern (19), die in einem Strafferrohr (10) geführt sind und durch eine Druckbeaufschlagung des Strafferrohres (10) antreibbar sind, wobei
- die Gurtwelle (3) durch Eingriff der angetriebenen Massekörper (19) in die Ausnehmungen (14) des Strafferantriebsrades (24) in Aufwickelrichtung des Sicherheitsgurtes antreibbar ist,
**dadurch gekennzeichnet, dass**
- die Lagerung der Gurtwelle (3) in der Öffnung (15) des Gehäuses (14) in Radialrichtung nachgiebig ausgebildet ist.

2. Gurtstraffer (1) nach Anspruch 1, **dadurch gekennzeichnet, dass**
- die Nachgiebigkeit der Lagerung entlang des Umfanges der Öffnung (15) unterschiedlich ausgebildet ist.

3. Gurtstraffer (1) nach Anspruch 2, **dadurch gekennzeichnet, dass**
- die Nachgiebigkeit der Lagerung in einem Elastizitätsabschnitt der Öffnung (15) am größten ist, welcher in einem Winkel (B) von wenigstens 60 Grad zu einer Austrittsstelle (A) der Massekörper (19) aus den Ausnehmungen (18) des Strafferantriebsrades (24) beginnt.

4. Gurtstraffer (1) nach Anspruch 3, **dadurch gekennzeichnet, dass**
- der Elastizitätsabschnitt in einem Winkel (D) von maximal 240 Grad zu der Austrittsstelle (A) endet.

5. Gurtstraffer (1) nach einem der vorangegangenen Ansprüche, **dadurch gekennzeichnet, dass**
- die Nachgiebigkeit durch einen oder mehrere Freiräume (21) in einem Randabschnitt der Öffnung (15) verwirklicht ist.

6. Gurtstraffer (1) nach einem der vorangegangenen Ansprüche, **dadurch gekennzeichnet, dass**
- die Nachgiebigkeit durch eine an dem Rand der Öffnung (15) angeordnete in Radialrichtung federnde Zunge (20) gebildet ist, an welcher die Gurtwelle (3) anliegt.

7. Gurtstraffer (1) nach Anspruch 6, **dadurch gekennzeichnet, dass**
- die Zunge (20) eine konstante Dicke aufweist.

8. Gurtstraffer (1) nach einem der vorangegangenen Ansprüche, **dadurch gekennzeichnet, dass**
- das Gehäuse (14) durch eine an einem Rahmen (11) des Gurtstraffers (1) befestigte Strafferabdeckung gebildet ist.

9. Gurtstraffer (1) nach einem der vorangegangenen Ansprüche, **dadurch gekennzeichnet, dass**
- die Nachgiebigkeit der Lagerung durch eine die Öffnung (15) in eine Vorzugsrichtung erweiternde Ausnehmung (25) gebildet ist.

## Claims

1. Belt tensioner (1) comprising a mass body drive for a seat belt of a motor vehicle having a force limiting device, said belt tensioner comprising
- a belt shaft (3) which is rotatably mounted in at least one opening (15) of a housing (14) that can be fastened to the vehicle and on which the seat belt can be wound,
- a tensioner drive wheel (24) which is connected to the belt shaft (3) for rotation therewith and has recesses (14) which are distributed at regular intervals over the circumference,
- a chain of loose mass bodies (19) which forms the mass body drive, which mass bodies are guided in a tensioner tube (10) and can be driven by applying pressure to the tensioner tube (10),
- it being possible to drive the belt shaft (3) in the winding direction of the seat belt by the driven mass bodies (19) engaging in the recesses (14) in the tensioner drive wheel (24), **characterized in that**
- the mounting of the belt shaft (3) in the opening (15) of the housing (14) is designed to be flexible in the radial direction.

2. Belt tensioner (1) according to claim 1, **characterized in that**
- the flexibility of the mounting is variable along the circumference of the opening (15).

3. Belt tensioner (1) according to claim 2, **characterized in that**
- the flexibility of the mounting is greatest in an elasticity portion of the opening (15) which begins at an angle (B) of at least 60 degrees to an exit point (A) of the mass bodies (19) from the recesses (18) in the tensioner drive wheel (24).

4. Belt tensioner (1) according to claim 3, **characterized in that**
- the elasticity portion ends at an angle (D) of a maximum of 240 degrees to the exit point (A).

5. Belt tensioner (1) according to any of the preceding claims, **characterized in that**
- the flexibility is achieved by one or more free spaces (21) in an edge portion of the opening (15).

6. Belt tensioner (1) according to any of the preceding claims, **characterized in that**
- the flexibility is created by a tongue (20) which is arranged on the edge of the opening (15) and is resilient in the radial direction, and against which the belt shaft (3) rests.

7. Belt tensioner (1) according to claim 6, **characterized in that**
- the tongue (20) has a constant thickness.

8. Belt tensioner (1) according to any of the preceding claims, **characterized in that**
- the housing (14) is formed by a tensioner cover fastened to a frame (11) of the belt tensioner (1).

9. Belt tensioner (1) according to any of the preceding claims, **characterized in that**
- the flexibility of the mounting is created by a recess (25) which widens the opening (15) in a preferred direction.

## Revendications

1. Prétensionneur de ceinture (1) comportant un entraînement de corps de masse pour une ceinture de sécurité d'un véhicule automobile comportant un dispositif de limitation de force comportant
- un arbre de ceinture (3) monté en rotation dans au moins une ouverture (15) d'un boîtier (14) qui peut être fixé au véhicule et sur lequel la ceinture de sécurité peut être enroulée,
- une roue d'entraînement de prétensionneur (24) reliée à l'arbre de ceinture (3) de manière fixe et comportant des évidements (14) répartis régulièrement sur la circonférence,
- une chaîne, formant l'entraînement de corps de masse, constituée de corps de masse (19) libres qui sont guidés dans un tube de prétensionneur (10) et peuvent être entraînés par une mise sous pression du tube de prétensionneur (10),
- l'arbre de ceinture (3) pouvant être entraîné dans le sens d'enroulement de la ceinture de sécurité par la mise en prise des corps de masse (19) entraînés dans les évidements (14) de la roue d'entraînement de prétensionneur (24),
**caractérisé en ce que**
- le palier de l'arbre de ceinture (3) dans l'ouverture (15) du boîtier (14) est conçu pour être flexible dans la direction radiale.

2. Prétensionneur de ceinture (1) selon la revendication 1, **caractérisé en ce que**
- la flexibilité du palier est conçue de manière différente le long de la circonférence de l'ouverture (15).

3. Prétensionneur de ceinture (1) selon la revendication 2, **caractérisé en ce que**
- la flexibilité du palier est maximale dans une section d'élasticité de l'ouverture (15) qui commence à un angle (B) d'au moins 60 degrés par rapport à un point de sortie (A) du corps de masse (19) au niveau des évidements (18) de la roue d'entraînement de prétensionneur (24).

4. Prétensionneur de ceinture (1) selon la revendication 3, **caractérisé en ce que**
- la section d'élasticité se termine à un angle (D) de 240 degrés maximum par rapport audit point de sortie (A).

5. Prétensionneur de ceinture (1) selon l'une des revendications précédentes, **caractérisé en ce que**
- la flexibilité est réalisée par un ou plusieurs espaces libres (21) dans une section de bord de l'ouverture (15).

6. Prétensionneur de ceinture (1) selon l'une des revendications précédentes, **caractérisé en ce que**
- la flexibilité est formée par une languette (20) élastique dans la direction radiale, disposée au bord de l'ouverture (15), l'arbre de ceinture (3) reposant sur ladite languette.

7. Prétensionneur de ceinture (1) selon la revendication 6, **caractérisé en ce que**
- la languette (20) présente une épaisseur constante.

8. Prétensionneur de ceinture (1) selon l'une des revendications précédentes, **caractérisé en ce que**
- le boîtier (14) est formé par un recouvrement de prétensionneur fixé sur un cadre (11) du prétensionneur de ceinture (1).

9. Prétensionneur de ceinture (1) selon l'une des revendications précédentes, **caractérisé en ce que**
- la flexibilité du palier est formée par un évidement (25) élargissant l'ouverture (15) dans une direction de préférence.
